Europäisches Patentamt

European Patent Office

Office européen des brevets

(11) Publication number: **0 217 607**
**A2**

(12) **EUROPEAN PATENT APPLICATION**

(21) Application number: 86307227.8

(22) Date of filing: 19.09.86

(51) Int. Cl.⁴: **H 04 N 1/40**

(30) Priority: 01.10.85 JP 150231/85

(43) Date of publication of application:
08.04.87 Bulletin 87/15

(84) Designated Contracting States: DE FR GB

(71) Applicant: SEIKO INSTRUMENTS & ELECTRONICS LTD.
31-1, Kameido 6-chome
Koto-ku Tokyo 136 (JP)

(72) Inventor: Tanaka, Fumihiro
Seiko Instruments & Electronics Ltd.
31-1, Kameido 6-chome Koto-ku Tokyo (JP)

Matsushima, Kenichi
Seiko Instruments & Electronics Ltd.
31-1, Kameido 6-chome Koto-ku Tokyo (JP)

Shimada, Yoshio
Seiko Instruments & Electronics Ltd.
31-1, Kameido 6-chome Koto-ku Tokyo (JP)

Yamaguchi, Kaneo
Seiko Instruments & Electronics Ltd.
31-1, Kameido 6-chome Koto-ku Tokyo (JP)

Watanabe, Shinya
Seiko Instruments & Electronics Ltd.
31-1, Kameido 6-chome Koto-ku Tokyo (JP)

(74) Representative: Caro, William Egerton et al
J. MILLER & CO. Lincoln House 296-302 High Holborn
London WC1V 7JH (GB)

(54) Threshold value setting circuit for a video signal interface and to recording apparatus provided therewith.

(57) A threshold value setting circuit of a video signal interface comprises a voltage comparator (2,64) which receives a luminance signal (1,66) and converts the luminance signal into a logic signal (68). A discrimination circuit (4) discriminates the output of the voltage comparator (2,64). A digital-analog conversion circuit (3) sets the threshold value of the voltage comparator (2,64) to an arbitrary value. In operation the output of the voltage comparator (2,64) for the set threshold value is discriminated, the setting of the reference voltage is sequentially changed in accordance with the result of discrimination, and a threshold value which is in agreement with a peak voltage of the luminance signal (66) is determined in order to measure the signal voltage of the luminance signal.

FIG. 5

# Description

## THRESHOLD VALUE SETTING CIRCUIT FOR A VIDEO SIGNAL INTERFACE AND TO RECORDING APPARATUS PROVIDED THEREWITH

This invention relates to threshold value setting circuits for video signal interfaces and in particular, although not so restricted, to recording apparatus for receiving video signals for displaying image data on display devices as input data and printing and recording an image.

Accuracy, density and resolution of graphic display devices used in recent image processing apparatus have been improved, and the clock frequency of pixels of video signals now exceed 100 MHz. The rise and fall of such high frequency signals are slow due to various limitations such as device characteristics and frequency characteristics of transmission lines, and the width of the reception signal varies in accordance with the threshold value at the time of reception of the signals. For this reason, setting of the threshold value is of importance.

It has been customary to adjust a reference voltage for setting a signal reception level by use of a variable resistor or to set it to a predetermined value. When a variable resistor is used, the signal level is measured by a measuring instrument such as an oscilloscope, and the threshold value is set to match this signal level.

However, the video signal level varies from model to model and variation exists even in the same model. Accordingly, adjustment by use of a measuring instrument is necessary whenever the apparatus is connected to a graphic terminal. When the apparatus is connected to a graphic terminal capable of multicolour multi-tone wedge display, a threshold value suitable for the display image must be set.

The present invention seeks to provide a threshold value setting circuit for high frequency and various level video signals.

According to the present invention there is provided a threshold value setting circuit for a video signal interface characterised by comprising: a voltage comparator for receiving a luminance signal and converting said luminance signal to a logic signal; a discrimination circuit for discriminating the output of said voltage comparator, and a digital-analog conversion circuit which sets the threshold value of said voltage comparator to an arbitrary value, the arrangement being such that, in operation, the output of said voltage comparatorforthe set threshold value is discriminated, the setting of said reference voltage is sequentially changed in accordance with the result of discrimination, and a threshold value which is in agreement with a peak voltage of said luminance signal is determined in order to measure the signal voltage of said luminance signal.

In operation, the reference voltage is finely changed while watching the state of the discrimination circuit in order to find out a point at which the peak value of the luminance signal is in agreement with the reference voltage. In this case, the set value of the reference voltage represents the voltage value of the luminance signal and when a predetermined ratio such as 0.5 is multiplied with this set data, an optimum threshold voltage can be set.

The invention is illustrated, merely by way of example, in the accompanying drawings, in which:-

Figure 1 is a block diagram of a video signal interface including a threshold value setting circuit according to the present invention;

Figure 2 is a circuit diagram of a flip-flop circuit forming part of the threshold value setting circuit of Figure 1;

Figure 3 is a timing chart illustrating measurement of signal voltage;

Figure 4 shows pulse characteristics of a video signal; and

Figure 5 is a block diagram showing a recording apparatus including a threshold value setting circuit according to the present invention.

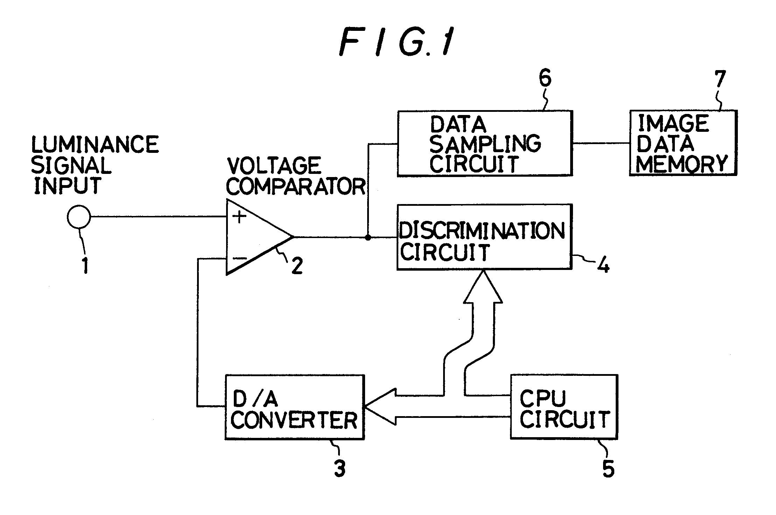

Referring first to Figure 1 there is illustrated a video signal interface including a threshold value setting circuit according to the present invention. The video signal interface has a luminance signal input terminal 1 connected to a positive input of a voltage comparator 2. The output of a digital-to-analog (D/A) converter 3 is connected to the negative input of the voltage comparator 2. The output voltage of the D/A converter 3 can be set arbitrarily under control of a CPU circuit 5. If this D/A converter 3 has a resolution of 8 bits and a maximum output voltage of about 2.5V, the resolution is about 10mV and this covers the range of ordinary video signal voltages from 0.5 to 2.0V and can set the voltage sufficiently finely. The output of the voltage comparator 2 is fed to a discrimination circuit 4 which discriminates the logic levels of the signal, and is written into an image data memory 7 through a data sampling circuit 6 where it is stored as print data.

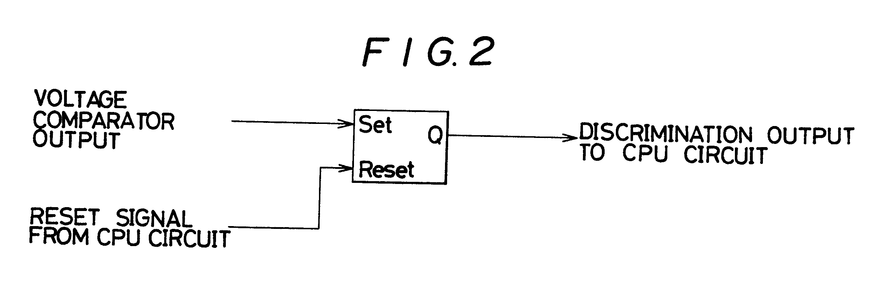

The discrimination circuit 4 can comprise, for example, an R-S flip-flop circuit as shown in Figure 2. The output of the voltage comparator 2 is connected to a SET input of the flip-flop while the reset signal from the CPU circuit 5 is applied to its RESET input. The state of the output Q of this flip-flop can be read by the CPU circuit 5.

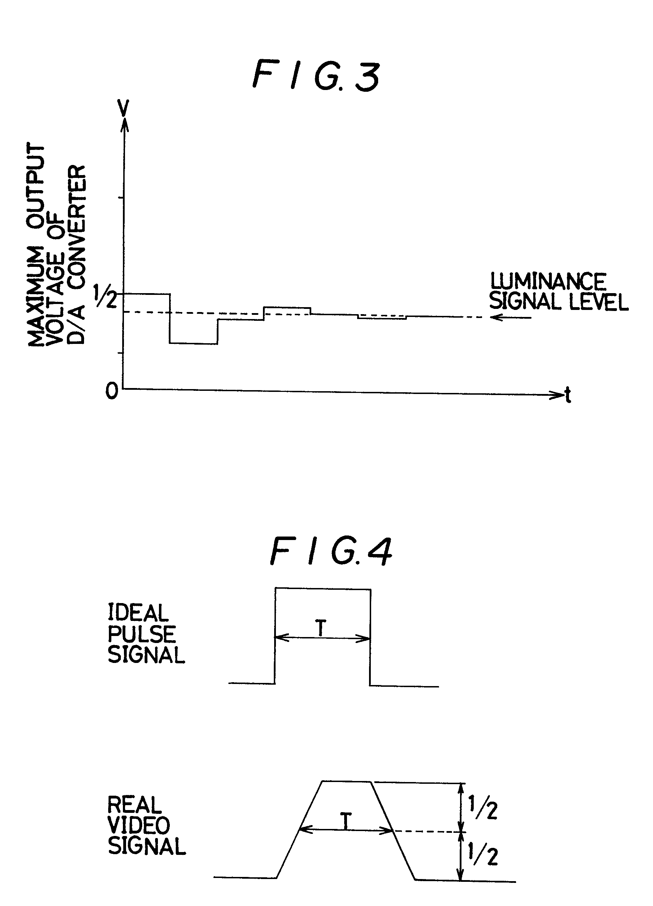

Next, the operation of the video signal interface of Figure 1 will be described in relation to Figure 3 which shows a discrimination sequence of a voltage level of an inputted luminance signal using the voltage comparator 2, the D/A converter 3 and the discrimination circuit 4. First of all, MSB (bit 7) of the D/A converter 3 is set to "1" while all the other bits are set to "0". This setting outputs a voltage which is about a half of the maximum output voltage. Next, the flip-flop (discriminator circuit 4) is reset and after the expiry of a predetermined time, the Q output is found SET as a result of reading, the threshold voltage that is set immediately before can be judged to be lower than the luminance signal voltage, so that "1" is set to the lower order bit. If the Q output is not found SET, on the other hand, the threshold voltage can be judged to be higher than the luminance signal voltage, so that the bit which is set immediately before it is changed to "0" and the lower bits are further set to "1".

When the bits are sequentially set from MSB in accordance with the sequence described above, the threshold voltage can be made to correspond to the signal voltage. Incidentally, setting of the least significant bit may be either "1" or "0", and the error due to this setting is sufficiently small so that there is no need to judge the result of setting.

The set value thus obtained can be handled as such as the voltage of the luminance signal.

As seen from Figure 4, a video signal is not an ideal pulse signal. It has a predetermined rise time and fall time and both are generally equal to each other. Accordingly, a signal having the same width as that of an ideal pulse can be taken out by setting the threshold value to the 50% level of the voltage of the luminance signal.

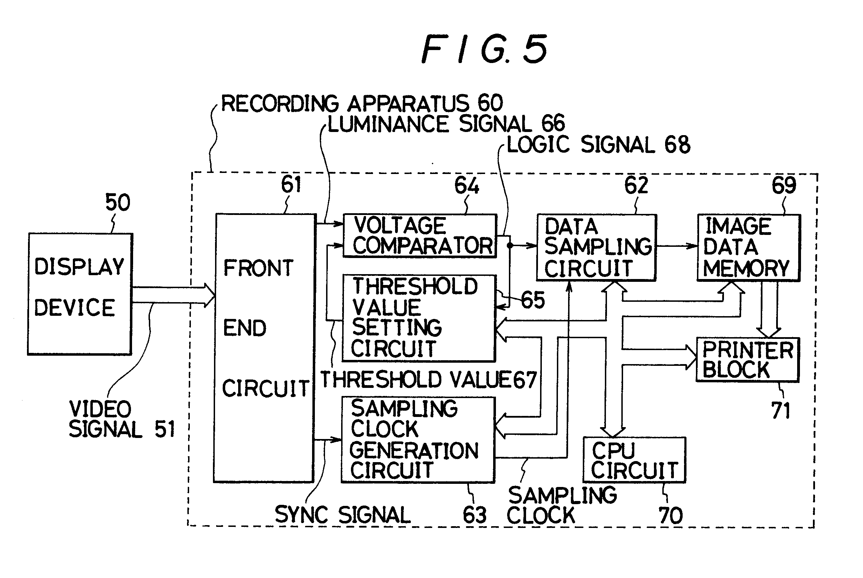

The threshold setting circuit described above is shown in Figure 5 incorporated in a recording apparatus 60. A video signal 51 is sent to the recording apparatus 60 from a display device 50. The recording apparatus has a front end circuit which provides a luminance signal 61 to a voltage comparator 64. A logic signal 68 is fed from the voltage comparator to a data sampling circuit 62 and a threshold value setting circuit 65 which produces a threshold value 67 to the voltage comparator 64. A sampling clock generation circuit 63 receives a sync signal from the front end circuit 61. A sampling clock is fed to the data sampling circuit 62 to drive an image data memory 69 which, in turn, controls a printer block 71. A CPU circuit 70 controls the threshold value setting circuit 65, the sampling clock generation circuit 63, the data sampling circuit 62, the image data memory 69 and the printer block 71.

As can be understood clearly from the description given above, the threshold value setting circuit according to the present invention and described above can easily set an optimum level for video signals of all levels and can set a threshold value of a predetermined level for the highest luminance level even for video signals representing multiple tone wedges. Therefore, reproducibility with respect to variance is high and the present invention can be connected to a plurality of terminals by use of a multiplexer.

## Claims

1. A threshold value setting circuit for a video signal interface characterised by comprising: a voltage comparator (2,64) for receiving a luminance signal (1,66) and converting said luminance signal to a logic signal (68); a discrimination circuit (4) for discriminating the output of said voltage comparator (2,64), and a digital-analog conversion circuit (3) which sets the threshold value of said voltage comparator (2,64) to an arbitrary value, the arrangement being such that, in operation, the output of said voltage comparator (2,64) for the set threshold value is discriminated, the setting of said reference voltage is sequentially changed in accordance with the result of discrimination, and a threshold value which is in agreement with a peak voltage of said luminance signal (1,66) is determined in order to measure the signal voltage of said luminance signal.

2. A recording apparatus characterised by having a threshold value setting circuit as claimed in claim 1.

3. In a recording apparatus (60) for receiving a video signal (51) for displaying image data on a display device (50) and printing and recording said image data, a threshold value setting circuit of a video signal interface comprising: (a) a voltage comprator (2,64) which receives a luminance signal (66) and converting said luminance signal (66) to a logic signal (68); (b) a discrimination circuit (4) which discriminates the output of said voltage comparator (2,64); and a digital-analog conversion circuit (3) which sets the threshold value of said voltage comparator (2,64) to an arbitrary value; whereby the output of said voltage comparator (2,64) for the set threshold value is discriminated, setting of said reference voltage is sequentially changed in accordance with the result of discrimination, and the threshold value which is in agreement with a peak voltage of said luminance signal (66) is determined in order to measure the signal voltage of said luminance signal (66).

# F I G.1

LUMINANCE
SIGNAL
INPUT

VOLTAGE
COMPARATOR

DATA
SAMPLING
CIRCUIT

IMAGE
DATA
MEMORY

DISCRIMINATION
CIRCUIT

D/A
CONVERTER

CPU
CIRCUIT

86307227 8

# F I G. 2

VOLTAGE
COMPARATOR
OUTPUT

| Set | Q |
| Reset | |

DISCRIMINATION OUTPUT
TO CPU CIRCUIT

RESET SIGNAL
FROM CPU CIRCUIT

# F I G. 3

MAXIMUM OUTPUT VOLTAGE OF D/A CONVERTER

LUMINANCE SIGNAL LEVEL

# F I G. 4

IDEAL PULSE SIGNAL

T

REAL VIDEO SIGNAL

T

$\frac{1}{2}$

$\frac{1}{2}$

# FIG.5

RECORDING APPARATUS 60
LUMINANCE SIGNAL 66
LOGIC SIGNAL 68

DISPLAY DEVICE — 50

VIDEO SIGNAL 51

FRONT END CIRCUIT — 61

VOLTAGE COMPARATOR — 64

THRESHOLD VALUE SETTING CIRCUIT — 65

THRESHOLD VALUE 67

SAMPLING CLOCK GENERATION CIRCUIT — 63

DATA SAMPLING CIRCUIT — 62

IMAGE DATA MEMORY — 69

PRINTER BLOCK — 71

CPU CIRCUIT — 70

SYNC SIGNAL

SAMPLING CLOCK

86307227 8